# EUROPEAN PATENT SPECIFICATION

(11) **EP 4 441 177 B1**
(45) Date of publication and mention of the grant of the patent: **06.08.2025**
(21) Application number: 22829704.0
(22) Date of filing: 01.12.2022
(51) Int. Cl.: C10M 155/04, C08L 43/00, C10M 157/10

(54) **BORONIC ESTER MODIFIED POLYALKYL(METH)ACRYLATE POLYMERS**
BORSÄUREESTER-MODIFIZIERTE POLYALKYL(METH)ACRYLATPOLYMERE
POLYMÈRES DE POLY(MÉTH)ACRYLATE D'ALKYLE MODIFIÉS PAR DES ESTERS BORONIQUES

(30) Priority: 03.12.2021 EP 21212163
(43) Date of publication of application: 09.10.2024
(73) Proprietor: Evonik Operations GmbH, 45128 Essen (DE)
(72) Inventor: MARKWART, Jens Christian, 65527 Niedernhausen (DE); SCHÖLLER, Katrin, 65929 Frankfurt (DE); BESTGEN, Sebastian, 97080 Würzburg (DE); MAIER, Stefan Karl, 64372 Ober-Ramstadt (DE); BRAUM, Manfred, 55126 Mainz (DE); HILF, Stefan, 64673 Zwingenberg (DE); SCHÜTZ, Thorben, 64665 Alsbach-Hähnlein (DE); NAWRATH, Tanja, 64404 Bickenbach (DE)
(74) Representative: Evonik Patent Association
(86) International application number: PCT/EP2022/083972
(87) International publication number: WO 2023/099632

(56) References cited:
- US-A1- 2018 023 028
- US-A1- 2019 382 679
- US-A1- 2021 309 930

## Description

The present invention is directed to boronic ester-modified polyalkyl(meth)acrylate polymers, their use to prepare thermo-associative polymers and a method for their preparation.

Global government vehicle regulations demand ever better fuel economy to reduce greenhouse gas emissions and conserve fossil fuels. There is an increasing demand for more fuel-efficient vehicles to meet the targets regarding CO₂ emissions. Therefore, any incremental improvement in fuel economy (FE) is of great importance in the automotive sector.

Lubricants are playing an important role in reducing a vehicle's fuel consumption and there is a continuing need for improvements in fuel economy performance.

Lubricant properties are typically improved by the addition of additives to lubricating oils. Viscosity index (VI) improvers are generally added to a lubricant to improve its thickening efficiency and to protect the engine as they are applied between the surfaces of moving parts, notably metal surfaces.

The thickening efficiency of a VI improver is specified by its KV100 (kinematic viscosity at 100°C) at a given treat rate. The thickening effect of a polymer increases as its hydrodynamic volume in the oil increases. Increasing temperature increases the solvency of the oil, which, in turn, promotes the uncoiling of the polymer and results in a larger hydrodynamic volume.

The hydrodynamic volume of a polymer in solution depends on many parameters, such as for example the polymer chain length and composition. The longer a polymer chain, the higher is usually the weight-average molecular weight M_{w}.

The drawback of using VI improvers with a high molecular weight is that they undergo significant and irreversible degradation under mechanical stress. Such degraded polymers then experience a decline in its thickening properties that goes along with an irreversible drop in in the viscosity of the lubricant.

One way to overcome this disadvantage is to prepare polymers of lower molecular weight that can associate under higher temperatures by exchanging chemical bonds in a thermo-reversible way.

### State of the Art

Patent applications US 2017/008989, US 2017/009176 and US 2018/0023028 disclose a composition resulting from the mixing of at least one copolymer A1 resulting from the copolymerization of at least one monomer functionalized by diol functional groups and of at least one compound A2 comprising at least two boronic ester functional groups. These compounds can associate and exchange chemical bonds in a thermo-reversible way. The polymers according to the present invention are not described.

WO 2019/171006 is directed to a composition resulting from the mixing of at least one comb polymer polydiol A1 and at least one compound A2 comprising at least two boronic ester functions. The polymers according to the present invention are not described.

WO 2019/171007 is directed to a composition resulting from the mixing of at least one polydiol compound A1 and at least one comb polymer A2 comprising at least two boronic ester functions. The polymers according to the present invention are not described.

WO 2019/224491, WO 2019/224492, WO 2019/224493 and WO 2019/224494 are directed to a composition resulting from the mixing of at least one oligomer A1, functionalized with diols and optionally comprising repeat units from at least on styrene monomer, and at least one compound A2 comprising at least two boronic ester functions. The polymers according to the present invention are not described.

It was now an object of the present invention to provide thermo-associative polymers that can be used as viscosity index improvers in lubricating oil compositions and that are stable over a broad temperature range. Such polymers should be usable at low treat rates.

Additionally, the synthesis of such polymers should be simple and easy to upscale, and the starting materials should be commercially available.

### Description of the invention

A first embodiment of the present invention is directed to boronic ester-modified polyalkyl (meth)acrylate **copolymers 1,** comprising the following monomers:
(a1) 0.5% to 30% by weight of C1-4 alkyl (meth)acrylates, preferably methyl methacrylate or butyl methacrylate, more preferably butyl methacrylate;
(a2) 40% to 70% by weight of C12-15 alkyl (meth)acrylates, preferably C12-14 alkyl (meth)acrylates;
(a3) 15% to 25% by weight of C16-30 alkyl (meth)acrylates, preferably C16-20 alkyl (meth)acrylates; and
(a4) 5% to 17% by weight of a vinylboronic acid ester of general formula (I)

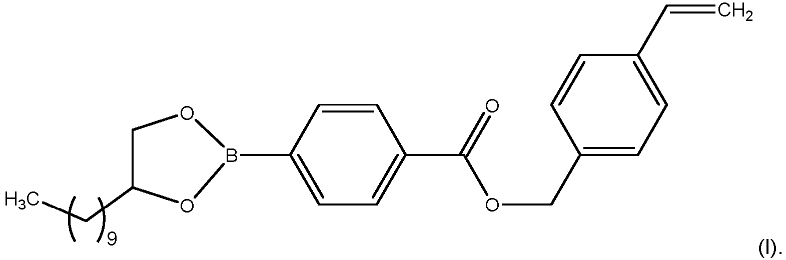

The content of each component (a1), (a2), (a3) and (a4) is based on the total composition of the boronic ester-modified polyalkyl (meth)acrylate **copolymers 1.**

In a particular embodiment, the proportions of components (a1), (a2), (a3) and (a4) add up to 100% by weight.

The weight-average molecular weight of the boronic ester-modified polyalkyl (meth)acrylate **copolymers 1** according to the present invention is preferably in the range of 50,000 g/mol to 200,000 g/mol, more preferably in the range of 70,000 g/mol to 170,000 g/mol. The number-average molecular weight of the polyalkyl(meth)acrylate polymers according to the present invention is preferably in the range of 10,000 to 100,000 g/mol, more preferably in the range of 20,000 to 60,000 g/mol, more preferably in the range of 20,000 g/mol to 50,000 g/mol.

Preferably, the polyalkyl(meth)acrylate **copolymers 1** according to the present invention have a polydispersity index (PDI) M_{w}/Mₙ in the range of 1 to 10, more preferably in the range of 2 to 4.

M_{w} and Mₙ are determined by size exclusion chromatography (SEC) using commercially available polymethylmethacrylate standards. The determination was done by gel permeation chromatography with THF as eluent.

The term "(meth)acrylates" refers to both, esters of acrylic acid and esters of methacrylic acid. Esters of methacrylic acid are preferred.

The C1-4 alkyl (meth)acrylates for use in accordance with the invention are esters of (meth)acrylic acid and straight chain or branched alcohols having 1 to 4 carbon atoms. The term "C1-4 alkyl methacrylates" encompasses individual (meth)acrylic esters with an alcohol of a particular length, and likewise mixtures of (meth)acrylic esters with alcohols of different lengths.

Suitable C1-4 alkyl (meth)acrylates include, for example, methyl (meth)acrylate, ethyl (meth)acrylate, *n*-propyl (meth)acrylate), *iso*-propyl (meth)acrylate, *n*-butyl (meth)acrylate, *iso*-butyl (meth)acrylate and *tert*-butyl (meth)acrylate. Particularly preferred C₁₋₄ alkyl (meth)acrylates are methyl (meth)acrylate and n-butyl (meth)acrylate; methyl methacrylate and n-butyl methacrylate are especially preferred.

The C16-30 alkyl (meth)acrylates for use in accordance with the invention are esters of (meth)acrylic acid and straight chain or branched alcohols having 16 to 30 carbon atoms. The term "C16-30 alkyl methacrylates" encompasses individual (meth)acrylic esters with an alcohol of a particular length, and likewise mixtures of (meth)acrylic esters with alcohols of different lengths. Suitable C16-30 alkyl (meth)acrylates include, for example, 2-hexyldecyl (meth)acrylate, 2-octyldecyl (meth)acrylate, undecyl (meth)acrylate, 5-methylundecyl (meth)acrylate, 2-hexyldodecyl (meth)acrylate, 2-octyldodecyl (meth)acrylate, 2-decyltetradecyl (meth)acrylate, hexadecyl (meth)acrylate, 2-methylhexadecyl (meth)acrylate, 2-dodecylhexadecyl (meth)acrylate, heptadecyl (meth)acrylate, 5-isopropylheptadecyl (meth)acrylate, 4-tert-butyloctadecyl (meth)acrylate, 5-ethyloctadecyl (meth)acrylate, 3-isopropyloctadecyl (meth)acrylate, octadecyl (meth)acrylate, 2-decyloctadecyl (meth)acrylate, 2-tetradecyloctadecyl (meth)acrylate, nonadecyl (meth)acrylate, eicosyl (meth)acrylate, cetyleicosyl (meth)acrylate, stearyleicosyl (meth)acrylate, docosyl (meth)acrylate and/or eicosyltetratriacontyl (meth)acrylate. 2-decyl-tetradecyl (meth)acrylate, 2-decyloctadecyl (meth)acrylate, 2-dodecyl-1-hexadecyl (meth)acrylate, 1,2-octyl-1-dodecyl (meth)acrylate, 2-tetradecylocadecyl (meth)acrylate, 1,2-tetradecyl-octadecyl (meth)acrylate and 2-hexadecyl-eicosyl (meth)acrylate.

The C12-15 alkyl (meth)acrylates for use in accordance with the invention are esters of (meth)acrylic acid and alcohols having 10 to 15 carbon atoms. The term "C12-15 alkyl (meth)acrylates" encompasses individual (meth)acrylic esters with an alcohol of a particular length, and likewise mixtures of (meth)acrylic esters with alcohols of different lengths.

Suitable C12-15 alkyl (meth)acrylates include, for example, decyl (meth)acrylate, undecyl (meth)acrylate, 5-methylundecyl (meth)acrylate, dodecyl (meth)acrylate, 2-methyldodecyl (meth)acrylate, tridecyl (meth)acrylate, 5-methyltridecyl (meth)acrylate, tetradecyl (meth)acrylate and/or pentadecyl (meth)acrylate.

Particularly preferred C12-15 alkyl (meth)acrylates are methacrylic esters of a linear C12-14 alcohol mixture (C12-14 alkyl methacrylate).

The C16-20 alkyl (meth)acrylates for use in accordance with the invention are esters of (meth)acrylic acid and alcohols having 16 to 20 carbon atoms. The term "C16-20 alkyl (meth)acrylates" encompasses individual (meth)acrylic esters with an alcohol of a particular length, and likewise mixtures of (meth)acrylic esters with alcohols of different lengths.

Suitable C16-20 alkyl (meth)acrylates include, for example, 2-hexyldecyl (meth)acrylate, 2-octyldecyl (meth)acrylate, undecyl (meth)acrylate, 5-methylundecyl (meth)acrylate and dodecyl (meth)acrylate.

Particularly preferred C16-20 alkyl (meth)acrylates are methacrylic esters of a linear C16-18 alcohol mixture (C16-18 alkyl methacrylate).

The boronic ester-modified polyalkyl (meth)acrylate **copolymers 1** according to the present invention may comprise further comonomers selected from the group consisting of styrene monomers having from 8 to 17 carbon atoms, vinyl esters having from 1 to 11 carbon atoms in the acyl group, vinyl ethers having from 1 to 10 carbon atoms in the alcohol group, (di)alkyl fumarates having from 1 to 10 carbon atoms in the alcohol group, (di)alkyl maleates having from 1 to 10 carbon atoms in the alcohol group, dispersing nitrogen-functionalized monomers, and mixtures of these monomers.

Examples of styrene monomers having from 8 to 17 carbon atoms are styrene, substituted styrenes having an alkyl substituent in the side chain, for example alpha-methylstyrene and alpha-ethylstyrene, substituted styrenes having an alkyl substituent on the ring, such as vinyltoluene and para-methylstyrene, halogenated styrenes, for example monochlorostyrenes, dichlorostyrenes, tribromostyrenes and tetrabromostyrenes; preferred is styrene.

Examples of vinyl esters having from 1 to 11 carbon atoms in the acyl group include vinyl formiate, vinyl acetate, vinyl propionate, vinyl butyrate. Preferred vinyl esters include from 2 to 9, more preferably from 2 to 5 carbon atoms in the acyl group. The acyl group here may be linear or branched.

Examples of vinyl ethers having from 1 to 10 carbon atoms in the alcohol group include vinyl methyl ether, vinyl ethyl ether, vinyl propyl ether, vinyl butyl ether. Preferred vinyl ethers include from 1 to 8, more preferably from 1 to 4 carbon atoms in the alcohol group. The alcohol group here may be linear or branched.

The notation "(di)ester" means that monoesters, diesters and mixtures of esters, especially of fumaric acid and/or of maleic acid, may be used. The (di)alkyl fumarates having from 1 to 10 carbon atoms in the alcohol group include monomethyl fumarate, dimethyl fumarate, monoethyl fumarate, diethyl fumarate, methyl ethyl fumarate, monobutyl fumarate, dibutyl fumarate, dipentyl fumarate and dihexyl fumarate. Preferred (di)alkyl fumarates comprise from 1 to 8, more preferably from 1 to 4 carbon atoms in the alcohol group. The alcohol group here may be linear or branched.

The (di)alkyl maleates having from 1 to 10 carbon atoms in the alcohol group include monomethyl maleate, dimethyl maleate, monoethyl maleate, diethyl maleate, methyl ethyl maleate, monobutyl maleate, dibutyl maleate. Preferred (di)alkyl maleates comprise from 1 to 8, more preferably from 1 to 4 carbon atoms in the alcohol group. The alcohol group here may be linear or branched.

Examples of dispersing nitrogen-functionalized monomers are aminoalkyl (meth)acrylates, such as N,N-dimethylaminoethyl (meth)acrylate, N,N-dimethylaminopropyl (meth)acrylate, N,N-diethylaminopentyl (meth)acrylate, N,N-dibutylaminohexadecyl (meth)acrylate; aminoalkyl(meth)acrylamides, such as N,N-dimethylaminopropyl(meth)acrylamide; heterocyclic (meth)acrylates, such as 2-(1-imidazolyl)ethyl (meth)acrylate, 2-(4-morpholinyl)ethyl (meth)acrylate, 1-(2-methacryloyloxyethyl)-2-pyrrolidone, N-methacryloylmorpholine, N-methacryloyl-2-pyrrolidinone, N-(2-methacryloyloxyethyl)-2-pyrrolidinone, N-(3-methacryloyloxypropyl)-2-pyrrolidinone; heterocyclic vinyl compounds, such as 2-vinylpyridine, 4-vinylpyridine, 2-methyl-5-vinylpyridine, 3-ethyl-4-vinylpyridine, 2,3-dimethyl-5-vinylpyridine, vinylpyrimidine, vinylpiperidine, 9-vinylcarbazole, 3-vinylcarbazole, 4-vinylcarbazole, 1-vinylimidazole, 2-methyl-1-vinylimidazole, N-vinylpyrrolidone, N-vinylpyrrolidine, 3-vinylpyrrolidine, N-vinylcaprolactam, N-vinylbutyrolactam, vinyloxolane, vinylfuran, vinyloxazoles and hydrogenated vinyloxazoles.

The N-dispersant monomer may specifically be at least one monomer selected from the group consisting of N-vinyl pyrrolidinone, N,N-dimethylaminoethyl methacrylate, and N,N-dimethylaminopropyl methacrylamide.

The polymers according to the present invention are characterized by their ability to form association-related thickeners.

A further embodiment of the present invention is therefore directed to the use of the boronic ester-modified polyalkyl (meth)acrylate **copolymers 1** as outlined further above to prepare association-related thickeners.

A second embodiment of the present invention is directed to an additive composition, comprising:
(A) 40% to 60% by weight of a base oil; and
(B) 40% to 60% by weight of a boronic ester-modified polyalkyl (meth)acrylate **copolymer 1,** comprising the following monomers:
   (a1) 0.5% to 30% by weight of C1-4 alkyl (meth)acrylates, preferably methyl methacrylate or butyl methacrylate, more preferably butyl methacrylate;
   (a2) 40% to 70% by weight of C12-15 alkyl (meth)acrylates, preferably C12-14 alkyl (meth)acrylates;
   (a3) 15% to 25% by weight of C16-30 alkyl (meth)acrylates, preferably C16-18 alkyl (meth)acrylates; and
   (a4) 5% to 17% by weight of a vinylboronic acid ester of general formula (I)

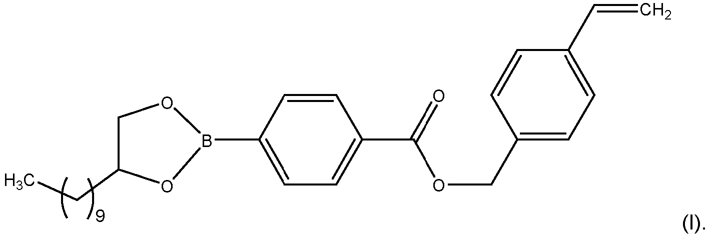

The content of each component (A) and (B) is based on the total weight of the additive composition. In a particular embodiment, the proportions of components (A) and (B) add up to 100% by weight.

The content of each component (a1), (a2), (a3) and (a4) is based on the total composition of the boronic ester-modified polyalkyl (meth)acrylate **copolymer 1.** In a particular embodiment, the proportions of components (a1), (a2), (a3) and (a4) add up to 100% by weight.

The base oil to be used in the additive composition comprises an oil of lubricating viscosity. Such oils include natural and synthetic oils, oil derived from hydrocracking, hydrogenation, and hydro-finishing, unrefined, refined, re-refined oils or mixtures thereof.

The base oil may also be defined as specified by the American Petroleum Institute (API) (see April 2008 version of "Appendix E-API Base Oil Interchangeability Guidelines for Passenger Car Motor Oils and Diesel Engine Oils", section 1.3 Sub-heading 1.3. "Base Stock Categories").

The API currently defines five groups of lubricant base stocks (API 1509, Annex E - API Base Oil Interchangeability Guidelines for Passenger Car Motor Oils and Diesel Engine Oils, September 2011). Groups I, II and III are mineral oils which are classified by the amount of saturates and sulphur they contain and by their viscosity indices; Group IV are polyalphaolefins; and Group V are all others, including e.g. ester oils. The table below illustrates these API classifications.

| Group | Saturates | Sulphur content | Viscosity Index (VI) |
|---|---|---|---|
| I | < 90% | > 0.03% | 80-120 |
| II | at least 90% | not more than 0.03% | 80-120 |
| III | at least 90% | not more than 0.03% | at least 120 |
| IV | All polyalphaolefins (PAOs) | | |
| V | All others not included in Groups I, II, III or IV (e.g. ester oils) | | |

The kinematic viscosity at 100°C (KV₁₀₀) of appropriate apolar base oils used to prepare an additive composition in accordance with the present invention is preferably in the range of 3 mm²/s to 10 mm²/s, more preferably in the range of 4 mm²/s to 8 mm²/s, according to ASTM D445.

Further base oils which can be used in accordance with the present invention are Group II-III Fischer-Tropsch derived base oils.

Fischer-Tropsch derived base oils are known in the art. By the term "Fischer-Tropsch derived" is meant that a base oil is, or is derived from, a synthesis product of a Fischer-Tropsch process. A Fischer-Tropsch derived base oil may also be referred to as a GTL (Gas-To-Liquids) base oil. Suitable Fischer-Tropsch derived base oils that may be conveniently used as the base oil in the additive composition of the present invention are those as for example disclosed in EP 0 776 959, EP 0 668 342, WO 97/21788, WO 00/15736, WO 00/14188, WO 00/14187, WO 00/14183, WO 00/14179, WO 00/08115, WO 99/41332, EP 1 029 029, WO 01/18156, WO 01/57166 and WO 2013/189951.

Especially for engine oil formulations are used base oils of API Group III.

The additive composition of the present invention comprises preferably 45% to 55% by weight, of the base oil (A) and 45% to 55% by weight, of the boronic ester-modified polyalkyl (meth)acrylate (B), based on the total weight of the additive composition.

A third embodiment of the present invention is directed to a mixture comprising equal amounts of:
(A) a boronic ester-modified polyalkyl (meth)acrylate **copolymer 1** comprising the following monomers:
   (a1) 0.5% to 30% by weight of C1-4 alkyl (meth)acrylates, preferably methyl methacrylate or butyl methacrylate, more preferably butyl methacrylate;
   (a2) 40% to 70% by weight of C12-15 alkyl (meth)acrylates, preferably C12-14 alkyl (meth)acrylates;
   (a3) 15% to 25% by weight of C16-30 alkyl (meth)acrylates, preferably C16-18 alkyl (meth)acrylates; and
   (a4) 5% to 17% by weight of a vinylboronic acid ester of general formula (I) 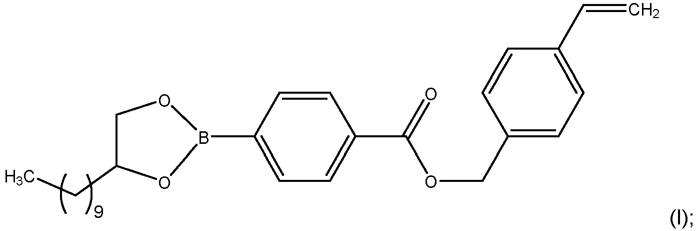 and
(B) a diol-functionalized polyalkyl (meth)acrylate **copolymer 2** comprising the following monomers:
   (b1) 5% to 40% by weight of C1-4 alkyl (meth)acrylates;
   (b2) 40% to 65% by weight of C12-15 alkyl (meth)acrylates, preferably C12-14 alkyl (meth)acrylates;
   (b3) 10% to 30% by weight of C16-30 alkyl (meth)acrylates, preferably C16-18 alkyl (meth)acrylates; and
   (b4) 2% to 10% by weight of a diol selected from the group consisting of 2,3-dihydroxypropyl methacrylate and 5,6-dihydroxyhexyl methacrylate.

The content of each component (A) and (B) is based on the total weight of the mixture. In a particular embodiment, the proportions of components (A) and (B) add up to 100% by weight.

The content of each component (a1), (a2), (a3) and (a4) is based on the total composition of the boronic ester-modified polyalkyl (meth)acrylate **copolymer 1.** In a particular embodiment, the proportions of components (a1), (a2), (a3) and (a4) add up to 100% by weight.

The content of each component (b1), (b2), (b3) and (b4) is based on the total composition of the diol-functionalized polyalkyl (meth)acrylate **copolymer 2.** In a particular embodiment, the proportions of components (b1), (b2), (b3) and (b4) add up to 100% by weight.

A further third embodiment of the present invention is directed to the mixture as defined further above, wherein component (a4) of the boronic ester-modified polyalkyl (meth)acrylate **copolymer 1** and component (b4) of the diol-functionalized polyalkyl (meth)acrylate **copolymer 2** are present in equal amounts of 6 mol% to 8 mol%.

The weight-average molecular weight of the diol-functionalized polyalkyl (meth)acrylate **copolymers 2** according to the present invention is preferably in the range of 50,000 g/mol to 400,000 g/mol, more preferably in the range of 70,000 g/mol to 200,000 g/mol. The number-average molecular weight of the polyalkyl(meth)acrylate polymers according to the present invention is preferably in the range of 10,000 g/mol to 150,000 g/mol, more preferably in the range of 20,000 g/mol to 50,000 g/mol.

Preferably, the diol-functionalized polyalkyl(meth)acrylate **copolymers 2** according to the present invention have a polydipersity index (PDI) M_{w}/Mₙ in the range of 1 to 10, more preferably in the range of 2 to 6, more preferably in the range of 3 to 5.

M_{w} and Mₙ are determined by size exclusion chromatography (SEC) using commercially available polymethylmethacrylate standards. The determination was done by gel permeation chromatography with THF as eluent.

The mixtures according to the present invention, comprising equal amounts of a polyalkyl (meth)acrylate **copolymer 1** and a polyalkyl (meth)acrylate **copolymer 2,** are characterized by their ability to form association-related thickeners.

A further embodiment of the present invention is therefore directed to the use of the mixture comprising equal amounts of boronic ester-modified polyalkyl (meth)acrylate **copolymers 1** and diol-functionalized polyalkyl (meth)acrylate **copolymers 2** according to the present invention to prepare association-related thickeners.

A further embodiment of the present invention is directed to a method for preparing association-related thickeners, comprising the steps of:
(i) preparing a boronic ester-modified polyalkyl (meth)acrylate **copolymer 1;**
(ii) preparing a diol-functionalized polyalkyl (meth)acrylate **copolymer 2;** and
(iii) mixing the boronic ester-modified polyalkyl (meth)acrylate **copolymer 1** of step (i) with the diol-functionalized polyalkyl (meth)acrylate **copolymer 2** to receive a thermo-associative thickener.

The boronic ester-modified polyalkyl (meth)acrylate **copolymers 1** and the diol-functionalized polyalkyl (meth)acrylate **copolymers 2** according to the present invention can be prepared by free-radical polymerization and by related methods of controlled free-radical polymerization, for example ATRP (= atom transfer radical polymerization) or RAFT (= reversible addition fragmentation chain transfer).

Standard free-radical polymerization is detailed, inter alia, in Ullmann's Encyclopedia of Industrial Chemistry, Sixth Edition. In general, a polymerization initiator and optionally a chain transfer agent are used for this purpose.

The usable initiators include azo initiators widely known in the technical field, such as AIBN and 1,1-azobiscyclohexanecarbonitrile, and also peroxy compounds such as methyl ethyl ketone peroxide, acetylacetone peroxide, dilauryl peroxide, tert-butyl per-2-ethylhexanoate, ketone peroxide, tert-butyl peroctoate, methyl isobutyl ketone peroxide, cyclohexanone peroxide, dibenzoyl peroxide, tert-butyl perbenzoate, 2,2-bis(tert-butylperoxy)butane, tert-butyl peroxyisopropylcarbonate, 2,5-bis(2-ethylhexanoylperoxy)-2,5-dimethylhexane, tert-butyl peroxy-2-ethylhexanoate, tert-butyl peroxy-3,5,5-trimethylhexanoate, dicumyl peroxide, 1,1-bis(tert-butylperoxy)cyclohexane, 1,1-bis(tert-butylperoxy)-3,3,5-trimethylcyclohexane, cumyl hydroperoxide, tert-butyl hydroperoxide, bis(4-tert-butylcyclohexyl) peroxydicarbonate, mixtures of two or more of the aforementioned compounds with one another, and mixtures of the aforementioned compounds with unspecified compounds which can likewise form free radicals. Preferably used in accordance with the present invention are tert-butyl perbenzoate and 2,2-bis(tert-butylperoxy)butane. Suitable chain transfer agents are especially oil-soluble mercaptans, for example n-dodecyl mercaptan or 2-mercaptoethanol, or else chain transfer agents from the class of the terpenes, for example terpinolene.

The ATRP method is known per se. It is assumed that this is a "living" free-radical polymerization, but no restriction is intended by the description of the mechanism. In these processes, a transition metal compound is reacted with a compound having a transferable atom group. This involves transfer of the transferable atom group to the transition metal compound, as a result of which the metal is oxidized. This reaction forms a free radical which adds onto ethylenic groups. However, the transfer of the atom group to the transition metal compound is reversible, and so the atom group is transferred back to the growing polymer chain, which results in formation of a controlled polymerization system. It is accordingly possible to control the formation of the polymer, the molecular weight and the molecular weight distribution.

This reaction regime is described, for example, by J.-S. Wang, et al., J. Am. Chem. Soc, vol. 117, p. 5614-5615 (1995), by Matyjaszewski, Macromolecules, vol. 28, p. 7901-7910 (1995). In addition, patent applications WO 96/30421, WO 97/47661, WO 97/18247, WO 98/40415 and WO 99/10387 disclose variants of the above-elucidated ATRP. In addition, the polymers of the invention can also be obtained via RAFT methods, for example. This method is described in detail, for example, in WO 98/01478 and WO 2004/083169.

The polymerization can be conducted under standard pressure, reduced pressure or elevated pressure. The polymerization temperature is also uncritical. In general, however, it is in the range from -20°C to 200°C, preferably 50°C to 150°C and more preferably 80°C to 130°C.

The polymerization can be conducted with or without solvent. The term "solvent" should be understood here in a broad sense. The solvent is selected according to the polarity of the monomers used, it being possible with preference to use 100N oil, comparatively light gas oil and/or aromatic hydrocarbons, for example toluene or xylene, as well as other organic solvents, for example butyl acetate.

The following figures illustrate the results retrieved for the viscosity indices when using the polymer compositions of the present invention:
- Figure 1:: Viscosity indices of polymer mixtures A to F (1:1 copolymer mixture in Yubase 4+ as base oil) versus solutions of the single polymers (equal parts of **copolymer 1** or **copolymer 2** in Yubase 4+ as base oil).
- Figure 2:: KV100 values of polymer mixtures A to F (1:1 copolymer mixture in Yubase **4+** as base oil) versus solutions of the single polymers (equal parts of **copolymer 1** or **copolymer 2** in Yubase **4+** as base oil).

The invention is further illustrated by the following non-limiting examples.

### Experimental Part

### Abbreviations

- AMA: alkyl methacrylate
- BAE: boronic acid ester 2 = 4-(4-decyl-1,3,2-dioxaborolan-2-yl)-benzoic acid (4-ethenylphenyl)methyl ester
- BMA: C₄-alkyl methacrylate = *n*-butyl methacrylate
- Diol 1: 2,3-dihydroxypropyl methacrylate (2,3-DHMA)
- Diol 2: 5,6-dihydroxyhexyl methacrylate (5,6-DHMA)
- GPC: gel permeation chromatography
- KV: kinematic viscosity measured according to ASTM D445
- KV40: kinematic viscosity @40°C, measured according to ASTM D7042
- KV100: kinematic viscosity @100°C, measured according to ASTM D7042
- LMA: lauryl methacrylate, 73% C12, 27% C14, all linear
- MMA: C₁-alkyl methacrylate = methyl methacrylate
- Mₙ: number-average molecular weight
- M_{w}: weight-average molecular weight
- NB3043: Nexbase^{®} 3043, Group III base oil from Neste with a KV100 of 4.3 cSt
- PDI: polydispersity index
- SMA: stearyl methacrylate, 6% C14, 30% C16, 64% C18, all linear
- tBPO: *tert*-butyl-peroxy-2-ethyl-hexanoate
- VI: viscosity index, measured according to ISO 2909
- Yubase **4+**: Group III base oil from SK Lubricants with a KV100 of 4.2 cSt

### Test methods

The boronic ester-modified polyalkyl (meth)acrylate **copolymers 1** and the diol-functionalized polyalkyl (meth)acrylate **copolymers 2** according to the present invention were characterized with respect to their molecular weight and PDI.

The weight-average molecular weights (M_{w}) of the boronic ester-modified polyalkyl (meth)acrylate **copolymers 1** and the diol-functionalized polyalkyl (meth)acrylate **copolymers 2** according to the present invention were determined by gel permeation chromatography (GPC) using polymethyl methacrylate calibration standards according to DIN 55672-1 using the following measurement conditions:

| | |
|---|---|
| Eluent: | tetrahydrofuran (THF) |
| Operation temperature: | 35°C |
| Column: | column set consisting of six columns: SDV (50 x 8 mm), SDV LXL, SDV LinL, SDV 100 Å, SDV 1040 Å and KF-800D (100 x 8 mm) (PSS Standards Service GmbH, Mainz, Germany), all with the size of 300 x 8 mm, if not noted differently, and an average particle size of10 µm |
| Flow rate: | 1 mL/min |
| Injected volume: | 100 µL |
| Instrument: | Agilent 1100 series consisting of an autosampler (1260 series), pump, I nline-degaser, control module and column oven |
| Detection device: | A refractive index detector from Agilent 1100 series and a UV detector from Agilent 1260 series. |

The additive compositions including the boronic ester-modified polyalkyl (meth)acrylate **copolymers 1** and the diol-functionalized polyalkyl (meth)acrylate **copolymers 2** according to the present invention were characterized with respect to their viscosity index (VI) to ASTM D 2270, kinematic viscosity at 40°C (KV40) and 100°C (KV100) to ASTM D445.

### (1) Synthesis of the boronic ester-modified polyalkyl (meth)acrylate copolymers 1

### (Example 1)

75.00 g of NB3043 were placed in a 4-necked glass flask equipped with a stirrer, temperature sensor and nitrogen pipe and heated to 106°C.

In a beaker, 3.85 g of a vinyl boronic acid ester were dissolved and homogenized in a mixture of 12.28 g of butyl methacrylate, 43.55 g of LMA and 14.14 g of SMA, and 0.44 g (0.6%, based on the total amount of monomers used) of tert-butylperoxy-2-ethylhexanoate were added.

This mixture was metered in with a metering pump over a period of 2 hours at 106°C while passing nitrogen over it.

After the end of the metering, the internal temperature was reduced to 95°C.

Subsequently, another 0.74 g (1.0%, based on the total amount of monomers used) of tert-butylperoxy-2-ethylhexanoate were added. The mixture was stirred for 150 minutes at 95°C and the reaction mixture was then cooled and filled. A 50% solution of the polymer in oil was obtained.

### (2) Synthesis of the diol-containing polyalkyl (meth)acrylate copolymers 2 (Example 9)

60.0 g of butyl acetate were placed in a 4-neck glass flask equipped with a stirrer, temperature sensor and nitrogen pipe and heated to 106°C.

A mixture of 19.53 g of butyl methacrylate, 4.44 g of Diol 2 (50% in ethyl acetate), 47.58 g of LMA and 19.43 g of SMA was homogenized and mixed with 0.36 g (0.4%, based on the total amount of monomers used) tert-butylperoxy-2-ethylhexanoate.

The resulting mixture was metered in with a metering pump over a period of 2 hours at 106°C while passing nitrogen over it.

After the end of the metering, the internal temperature was reduced to 95°C.

Subsequently, another 0.91 g (1.0%, based on the total amount of monomers used) of tert-butylperoxy-2-ethylhexanoate was added.

The mixture was then stirred for 150 minutes at 95°C and the reaction mixture is then cooled and filled.

The mixture obtained was mixed with 90 g of NB3043 and the butyl acetate was drawn off on a rotary evaporator at 100°C under vacuum. A 50% solution of the polymer in oil was obtained.

The following Table 1 shows the monomers used to prepare **copolymers 1** and **copolymers 2. Copolymers 1** were prepared according to synthesis (1) described further above for the preparation of Example 1; **copolymers 2** were prepared according to synthesis (2) described further above for the preparation of Example 3.

**Table 1: Monomer mixtures used to prepare copolymers 1 and copolymers 2.**

| **Example #** | **BMA [g]** | **LMA [g]** | **SMA [g]** | **BAE [g]** | **Diol 1 [g]** | **Diol 2 [g]** | **Sum [g]** |
|---|---|---|---|---|---|---|---|
| **1** | 12.28 | 43.55 | 14.14 | 3.85 | -- | -- | 73.82 |
| **2** | 0.44 | 49.96 | 16.17 | 7.20 | -- | -- | 73.77 |
| **3** | 12.70 | 38.30 | 15.62 | 7.20 | -- | -- | 73.82 |
| **4** | 12.12 | 38.75 | 12.58 | 10.37 | -- | -- | 73.82 |
| **5** | 11.91 | 41.26 | 13.40 | 7.26 | -- | -- | 73.83 |
| **6** | 1.14 | 45.75 | 14.85 | 12.08 | -- | -- | 73.82 |
| **7** | 11.89 | 41.24 | 13.38 | 7.31 | -- | -- | 73.82 |
| **8** | 17.20 | 35.01 | 14.30 | 7.31 | -- | -- | 73.82 |
| **9** | 19.53 | 47.58 | 19.43 | -- | -- | 4.44*⁾ (2.22) | 88.76 |
| **10** | 9.12 | 53.28 | 21.75 | -- | -- | 8.86*⁾ (4.43) | 88.58 |
| **11** | 23.03 | 43.41 | 17.72 | -- | -- | 8.86*⁾ (4.43) | 88.59 |
| **12** | 27.46 | 38.68 | 15.79 | -- | -- | 13.29*⁾ (6.65) | 88.58 |
| **13** | 23.47 | 43.09 | 17.59 | -- | -- | 8.86*⁾ (4.43) | 88.58 |
| **14** | 16.83 | 45.17 | 18.43 | -- | -- | 16.30*⁾ (8.15) | 88.58 |
| **15** | 23.47 | 43.09 | 17.59 | -- | -- | 8.86*⁾ (4.43) | 88.58 |
| **16** | 28.35 | 39.63 | 16.18 | -- | -- | 8.86*⁾ (4.43) | 88.59 |
| **17** | 28.84 | 38.68 | 15.79 | -- | 5.26 | -- | 88.57 |
| **18** | 24.40 | 43.09 | 17.59 | -- | 3.51 | -- | 88.59 |

| | | | | | | | |
|---|---|---|---|---|---|---|---|
| *) diol 2 was added as a 50% solution in ethyl acetate | | | | | | | |

**Table 2: Preparation details of copolymers 1 and copolymers 2.**

| **Example #** | **Synthesis #** | **Nexbase 3043 [g]** | **Butyl acetate [g]** | **Initiator [%]** | **Targeted polymer** |
|---|---|---|---|---|---|
| **1** | (1) | 75.0 | -- | 0.6/1.0 | **Polymer 1** |
| **2** | (1) | 75.0 | -- | 0.6/1.0 | **Polymer 1** |
| **3** | (1) | 75.0 | -- | 0.6/1.0 | **Polymer 1** |
| **4** | (1) | 75.0 | -- | 0.6/1.0 | **Polymer 1** |
| **5** | (1) | 75.0 | -- | 0.6/1.0 | **Polymer 1** |
| **6** | (1) | 75.0 | -- | 0.6/1.0 | **Polymer 1** |
| **7** | (1) | 75.0 | -- | 0.6/1.0 | **Polymer 1** |
| **8** | (1) | 75.0 | -- | 0.6/1.0 | **Polymer 1** |
| **9** | (2) | -- | 60.0 | 0.4/1.0 | **Polymer 2** |
| **10** | (2) | -- | 60.0 | 0.6/1.0 | **Polymer 2** |
| **11** | (2) | -- | 60.0 | 0.6/1.0 | **Polymer 2** |
| **12** | (2) | -- | 60.0 | 0.6/1.0 | **Polymer 2** |
| **13** | (2) | -- | 60.0 | 0.6/1.0 | **Polymer 2** |
| **14** | (2) | -- | 60.0 | 0.6/1.0 | **Polymer 2** |
| **15** | (2) | -- | 60.0 | 0.6/1.0 | **Polymer 2** |
| **16** | (2) | -- | 60.0 | 0.6/1.0 | **Polymer 2** |
| **17** | (2) | -- | 60.0 | 0.6/1.0 | **Polymer 2** |
| **18** | (2) | -- | 60.0 | 0.6/1.0 | **Polymer 2** |

Examples 1-8 are boronic ester-modified polyalkyl (meth)acrylate **copolymers 1,** examples 9-18 are diol-functionalized polyalkyl (meth)acrylate **copolymers 2.** Diol 1 was used as pure substance in the synthesis of the polymers, diol 2 was used as a 50% solution in ethyl acetate.

Table 3 shows the net compositions of the boronic ester-modified polyalkyl (meth)acrylate **copolymers 1** and the diol-functionalized polyalkyl (meth)acrylate **copolymers 2** prepared in accordance with the present invention. The monomer components will add up to 100%. As the residual monomer content in the retrieved polymers is significantly below 1%, the net compositions of the polymers correspond to the used monomer compositions.

**Table 3: Net composition of copolymers 1 and copolymers 2.**

| **Example #** | **BMA [wt%]** | **LMA [wt%]** | **SMA [wt%]** | **BAE [wt%]** | **Diol 1 [wt%]** | **Diol 2 [wt%]** | **Sum [wt.%]** |
|---|---|---|---|---|---|---|---|
| **1** | 16.63 | 59.00 | 19.15 | 5.22 | -- | -- | 100 |
| **2** | 0.60 | 67.72 | 21.92 | 9.76 | -- | -- | 100 |
| **3** | 17.20 | 51.89 | 21.16 | 9.75 | -- | -- | 100 |
| **4** | 16.42 | 52.49 | 17.04 | 14.05 | -- | -- | 100 |
| **5** | 16.13 | 55.89 | 18.15 | 9.83 | -- | -- | 100 |
| **6** | 1.54 | 61.98 | 20.12 | 16.36 | -- | -- | 100 |
| **7** | 16.11 | 55.87 | 18.12 | 9.90 | -- | -- | 100 |
| **8** | 23.30 | 47.43 | 19.37 | 9.90 | -- | -- | 100 |
| **9** | 22.00 | 53.61 | 21.89 | -- | -- | 2.5 | 100 |
| **10** | 10.30 | 60.15 | 24.55 | -- | -- | 5.0 | 100 |
| **11** | 26.00 | 49.00 | 20.00 | -- | -- | 5.0 | 100 |
| **12** | 31.00 | 43.67 | 17.83 | -- | -- | 7.5 | 100 |
| **13** | 26.50 | 48.64 | 19.86 | -- | -- | 5.0 | 100 |
| **14** | 19.00 | 50.99 | 20.81 | -- | -- | 9.2 | 100 |
| **15** | 26.50 | 48.64 | 19.86 | -- | -- | 5.0 | 100 |
| **16** | 32.00 | 44.74 | 18.26 | -- | -- | 5.0 | 100 |
| **17** | 32.60 | 43.67 | 17.83 | -- | 5.9 | -- | 100 |
| **18** | 27.50 | 48.64 | 19.86 | -- | 4.0 | -- | 100 |

The resulting polymers were characterized by their molecular weight and PDI. The results are shown in the following Table 4.

**Table 4: Physical properties of copolymers 1 and copolymers 2.**

| **Example #** | **M_{w} [g/mol]** | **Mₙ [g/mol]** | **PDI** |
|---|---|---|---|
| **1** | 124,000 | 42,100 | 2.9 |
| **2** | 73,400 | 28,800 | 2.6 |
| **3** | 121,000 | 42,700 | 2.8 |
| **4** | 137,000 | 40,600 | 3.4 |
| **5** | 121,000 | 40,100 | 3.0 |
| **6** | 120,000 | 36,200 | 3.3 |
| **7** | 130,000 | 41,800 | 3.1 |
| **8** | 140,000 | 41,700 | 3.4 |
| **9** | 163,000 | 35,200 | 4.6 |
| **10** | 110,000 | 29,900 | 3.7 |
| **11** | 95,300 | 26,600 | 3.6 |
| **12** | 106,000 | 29,200 | 3.6 |
| **13** | 105,000 | 26,200 | 4.0 |
| **14** | 89,700 | 24,900 | 3.6 |
| **15** | 105,000 | 30,600 | 3.4 |
| **16** | 100,000 | 27,800 | 3.6 |
| **17** | 111,000 | 31,600 | 3.5 |
| **18** | 105,000 | 30,800 | 3.4 |

The thickening efficiency of a VI improver is specified by its KV100 (kinematic viscosity at 100°C) at a given treat rate.

The single polymers were dissolved in a base oil and the retrieved solutions were characterized by their KV40, KV100 and VI. The results are shown in the following Tables 5 and 6.

**Table 5: Viscometric data of solutions of copolymer 1 (boron ester) in Yubase 4+ as base oil.**

| **Example #** | **Concentration [%]** | **KV40 [mm²/s]** | **KV100 [mm²/s]** | **VI** |
|---|---|---|---|---|
| **1** | 3.75 | 27.04 | 6.40 | 202 |
| **4** | 6.48 | 32.94 | 7.95 | 197 |
| **4** | 3.75 | 25.54 | 6.11 | 187 |
| **7** | 3.60 | 26.07 | 6.22 | 202 |

**Table 6: Viscometric data of solutions of copolymer 2 (diol) in Yubase 4+ as base oil.**

| **Example #** | **Concentration [%]** | **KV40 [mm²/s]** | **KV100 [mm²/s]** | **VI** |
|---|---|---|---|---|
| **9** | 3.75 | 26.40 | 6.44 | 213 |
| **12** | 6.48 | 31.52 | 7.53 | 220 |
| **12** | 3.75 | 24.62 | 5.87 | 197 |
| **15** | 3.60 | 23.92 | 5.69 | 193 |
| **17** | 3.75 | 23.36 | 5.51 | 187 |
| **18** | 3.60 | 23.70 | 5.64 | 193 |

To show the associative effect of the polymers, mixtures comprising equal parts of a **copolymer 1** and a **copolymer 2** in a base oil were prepared and, subsequently, KV40, KV100 and viscosity indices were measured.

The corresponding values are outlined in the following Table 7.

**Table 7: Viscometric data of solutions of 1:1 mixtures of equal parts of copolymer 1 (boron ester) and copolymer 2 (diol) in Yubase 4+ as base oil.**

| | **Copolymer 1** | | **Copolymer 2** | | **Viscometric data** | | |
|---|---|---|---|---|---|---|---|
| **Mixture #** | **Example #** | **Conc. [%]** | **Example #** | **Conc. [%]** | **KV40 [mm²/s]** | **KV100 [mm²/s]** | **VI** |
| **A** | 4 | 1.875 | 12 | 1.875 | 28.73 | 7.60 | 253 |
| **B** | 4 | 3.24 | 12 | 3.24 | 48.91 | 16.25 | 348 |
| **C** | 7 | 1.80 | 15 | 1.80 | 28.36 | 7.64 | 259 |
| **D** | 1 | 1.875 | 9 | 1.875 | 30.45 | 8.04 | 257 |
| **E** | 4 | 1.875 | 17 | 1.875 | 26.94 | 7.31 | 259 |
| **F** | 7 | 1.80 | 18 | 1.80 | 26.65 | 7.01 | 245 |

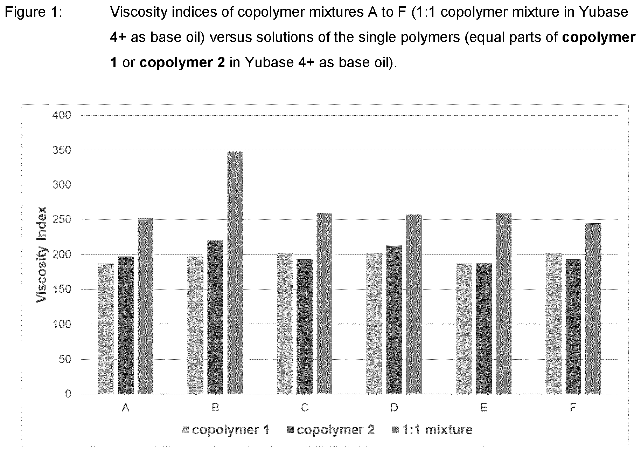

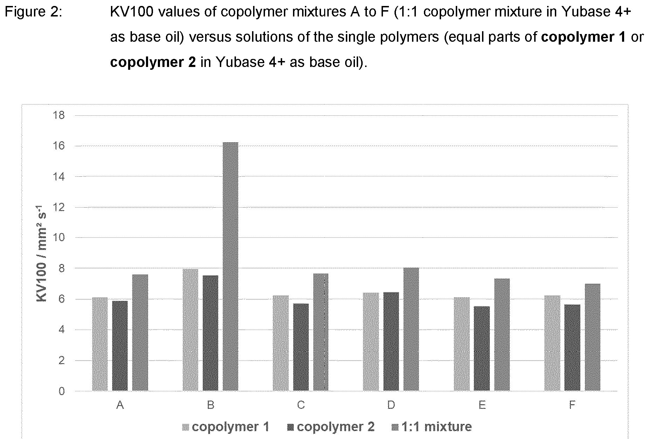

Table 7 shows that synergistic effects were found for increasing the KV100 and VI of the polymer solutions containing the 1:1 mixture of **copolymer 1** and **copolymer 2.** The KV100 and VI of the 1:1 mixture of the polymers was increased versus the VI of the single polymer solutions (see Figures 1 and 2). The overall polymer concentration was the same in all solutions.

A higher KV100 at the same treat rate is considered to be beneficial for net treat cost and performance criteria.

## Claims

1. Boronic ester-modified polyalkyl (meth)acrylate **copolymers 1**, comprising the following monomers:
(a1) 0.5% to 30% by weight of C1-4 alkyl (meth)acrylates, preferably methyl methacrylate or butyl methacrylate, more preferably butyl methacrylate;
(a2) 40% to 70% by weight of C12-15 alkyl (meth)acrylates, preferably C12-14 alkyl (meth)acrylates;
(a3) 15% to 25% by weight of C16-30 alkyl (meth)acrylates, preferably C16-20 alkyl (meth)acrylates; and
(a4) 5% to 17% by weight of a vinylboronic acid ester of general formula (I)

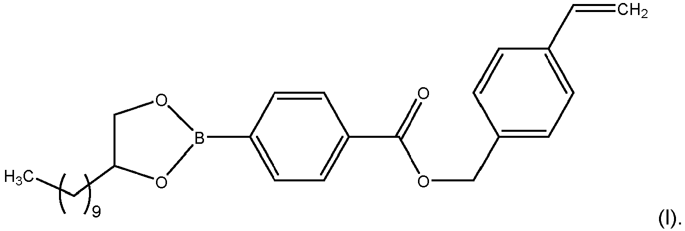

2. Boronic ester-modified polyalkyl (meth)acrylate **copolymers 1** according to claim 1, wherein the weight-average molecular weight M_{w} is in the range of 50,000 to 200,000 g/mol, preferably in the range of 70,000 to 170,000 g/mol, determined by gel permeation chromatography (GPC) using polymethyl methacrylate calibration standards according to DIN 55672-1.

3. Use of boronic ester-modified polyalkyl (meth)acrylate **copolymers 1** according to claim 1 or 2 for preparing association-related thickeners.

4. Additive composition, comprising:
(A) 40% to 60% by weight of a base oil; and
(B) 40% to 60% by weight of a boronic ester-modified polyalkyl (meth)acrylate **copolymer 1,** comprising the following monomers:
(a1) 0.5% to 30% by weight of C1-4 alkyl (meth)acrylates, preferably methyl methacrylate or butyl methacrylate, more preferably butyl methacrylate;
(a2) 40% to 70% by weight of C12-15 alkyl (meth)acrylates, preferably C12-14 alkyl (meth)acrylates;
(a3) 15% to 25% by weight of C16-30 alkyl (meth)acrylates, preferably C16-20 alkyl (meth)acrylates; and
(a4) 5% to 17% by weight of a vinylboronic acid ester of general formula (I)

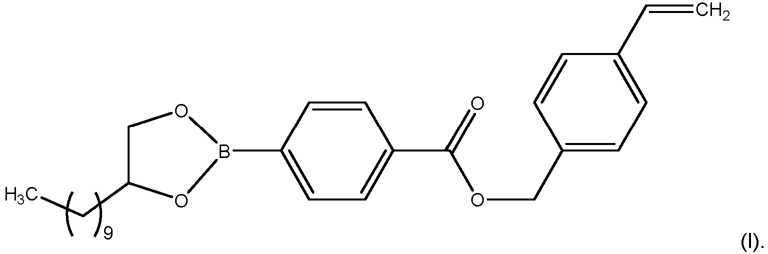

5. Additive composition according to claim 4, wherein the base oil is selected from the Group consisting of API Group I oils, API Group II oils, API Group III oils, API Group IV oils, API Group V oils and mixtures thereof; preferably API Group III oils and mixtures thereof.

6. A mixture comprising equal amounts of:
(A) a boronic ester-modified polyalkyl (meth)acrylate **copolymer 1** comprising the following monomers:
(a1) 0.5% to 30% by weight of C1-4 alkyl (meth)acrylates, preferably methyl methacrylate or butyl methacrylate, more preferably butyl methacrylate;
(a2) 40% to 70% by weight of C12-15 alkyl (meth)acrylates, preferably C12-14 alkyl (meth)acrylates;
(a3) 15% to 25% by weight of C16-30 alkyl (meth)acrylates, preferably C16-20 alkyl (meth)acrylates; and
(a4) 5% to 17% by weight of a vinylboronic acid ester of general formula (I) 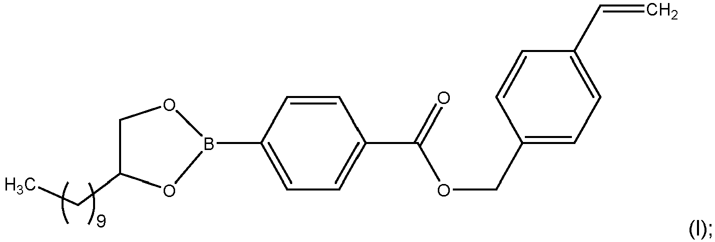 and
(B) a diol-functionalized polyalkyl (meth)acrylate **copolymer 2** comprising the following monomers:
(b1) 5% to 40% by weight of C1-4 alkyl (meth)acrylates;
(b2) 40% to 65% by weight of C12-15 alkyl (meth)acrylates, preferably C12-14 alkyl (meth)acrylates;
(b3) 10% to 30% by weight of C16-30 alkyl (meth)acrylates, preferably C16-20 alkyl (meth)acrylates; and
(b4) 2% to 10% by weight of a diol selected from the group consisting of 2,3-dihydroxypropyl methacrylate and 5,6-dihydroxyhexyl methacrylate.

7. The mixture according to claim 6, wherein component (a4) of the boronic ester-modified polyalkyl (meth)acrylate **copolymer 1** and component (b4) of the diol-functionalized polyalkyl (meth)acrylate **polymer 2** are present in equal amounts of 6 mol% to 8 mol%.

8. Use of a mixture according to claims 6 and 7, comprising equal amounts of boronic ester-modified polyalkyl (meth)acrylate **copolymers 1** and diol-functionalized polyalkyl (meth)acrylate **copolymers 2** to prepare association-related thickeners.

9. Method for preparing association-related thickeners, comprising the steps of:
(i) preparing a boronic ester-modified polyalkyl (meth)acrylate copolymer 1;
(ii) preparing a diol-functionalized polyalkyl (meth)acrylate **copolymer 2;** and
(iii) mixing the boronic ester-modified polyalkyl (meth)acrylate copolymer 1 of step (i)
with the diol-functionalized polyalkyl (meth)acrylate copolymer 2 to receive a thermo-associative thickener.

## Patentansprüche

1. Boronsäureestermodifizierte Polyalkyl(meth)acrylatCopolymere 1, umfassend die folgenden Monomere:
(a1) 0,5 bis 30 Gew.-% C1-4-Alkyl(meth)acrylate, vorzugsweise Methylmethacrylat oder Butylmethacrylat, weiter bevorzugt Butylmethacrylat;
(a2) 40 bis 70 Gew.-% C12-15-Alkyl(meth)acrylate, vorzugsweise C12-14-Alkyl(meth)acrylate;
(a3) 15 bis 25 Gew.-% C16-30-Alkyl(meth)acrylate, vorzugsweise C16-20-Alkyl(meth)acrylate; und
(a4) 5 bis 17 Gew.-% eines Vinylboronsäureesters der allgemeinen Formel (I)

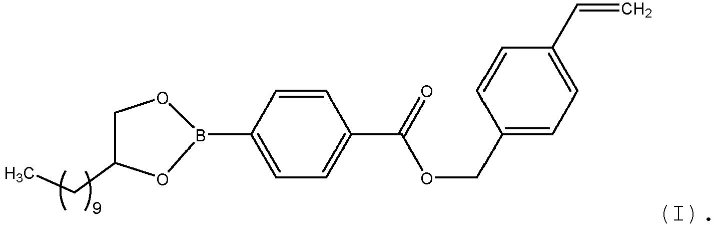

2. Boronsäureestermodifizierte Polyalkyl(meth)acrylatCopolymere 1 nach Anspruch 1, wobei das gewichtsmittlere Molekulargewicht M_{w} im Bereich von 50.000 bis 200.000 g/mol, vorzugsweise im Bereich von 70.000 bis 170.000 g/mol, bestimmt durch Gelpermeationschromatographie (GPC) unter Verwendung von Polymethylmethacrylat-Kalibrierstandards nach DIN 55672-1, liegt.

3. Verwendung von boronsäureestermodifizierten Polyalkyl(meth)acrylat-Copolymeren 1 nach Anspruch 1 oder 2 zur Herstellung von assoziativen Verdickern.

4. Additivzusammensetzung, umfassend:
(A) 40 bis 60 Gew.-% eines Grundöls; und
(B) 40 bis 60 Gew.-% eines boronsäureestermodifizierten Polyalkyl(meth)acrylat-Copolymers 1, umfassend die folgenden Monomere:
(a1) 0,5 bis 30 Gew.-% C1-4-Alkyl(meth)acrylate, vorzugsweise Methylmethacrylat oder Butylmethacrylat, weiter bevorzugt Butylmethacrylat;
(a2) 40 bis 70 Gew.-% C12-15-Alkyl(meth)acrylate, vorzugsweise C12-14-Alkyl(meth)acrylate;
(a3) 15 bis 25 Gew.-% C16-30-Alkyl(meth)acrylate, vorzugsweise C16-20-Alkyl(meth)acrylate; und
(a4) 5 bis 17 Gew.-% eines Vinylboronsäureesters der allgemeinen Formel (I)

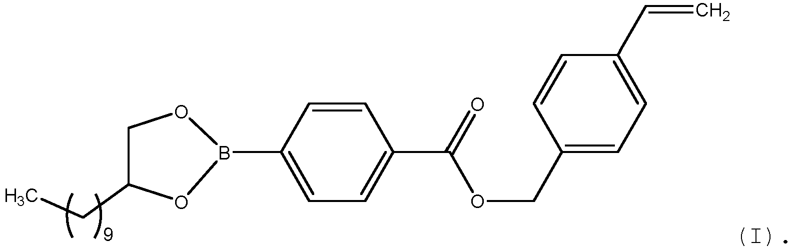

5. Additivzusammensetzung nach Anspruch 4, wobei das Grundöl aus der Gruppe bestehend aus Ölen der API-Gruppe I, Ölen der API-Gruppe II, Ölen der API-Gruppe III, Ölen der API-Gruppe IV, Ölen der API-Gruppe V und Mischungen davon, vorzugsweise Ölen der API-Gruppe III und Mischungen davon, ausgewählt ist.

6. Mischung, umfassend gleiche Mengen von:
(A) einem boronsäureestermodifizierten Polyalkyl(meth)acrylat-Copolymer 1, umfassend die folgenden Monomere:
(a1) 0,5 bis 30 Gew.-% C1-4-Alkyl(meth)acrylate, vorzugsweise Methylmethacrylat oder Butylmethacrylat, weiter bevorzugt Butylmethacrylat;
(a2) 40 bis 70 Gew.-% C12-15-Alkyl(meth)acrylate, vorzugsweise C12-14-Alkyl(meth)acrylate;
(a3) 15 bis 25 Gew.-% C16-30-Alkyl(meth)acrylate, vorzugsweise C16-20-Alkyl(meth)acrylate; und
(a4) 5 bis 17 Gew.-% eines Vinylboronsäureesters der allgemeinen Formel (I) 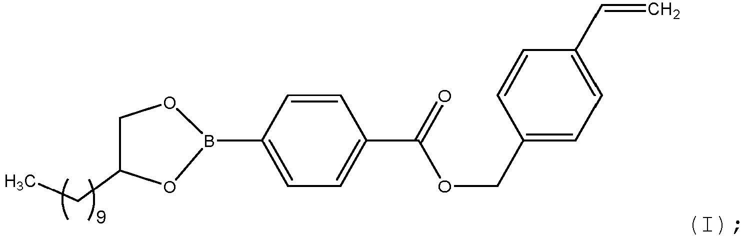 und
(B) ein diolfunktionalisiertes Polyalkyl(meth)acrylat-Copolymer 2, umfassend die folgenden Monomere:
(b1) 5 bis 40 Gew.-% C1-4-Alkyl(meth)acrylate;
(b2) 40 bis 65 Gew.-% C12-15-Alkyl(meth)acrylate, vorzugsweise C12-14-Alkyl(meth)acrylate;
(b3) 10 bis 30 Gew.-% C16-30-Alkyl(meth)acrylate, vorzugsweise C16-20-Alkyl(meth)acrylate; und
(b4) 2 bis 10 Gew.-% eines Diols, das aus der Gruppe bestehend aus 2,3-Dihydroxypropylmethacrylat und 5,6-Dihydroxyhexylmethacrylat ausgewählt ist.

7. Mischung nach Anspruch 6, wobei Komponente (a4) des boronsäureestermodifizierten Polyalkyl(meth)acrylat-Copolymers 1 und Komponente (b4) des diolfunktionalisierten Polyalkyl(meth)acrylat-Polymers 2 in gleichen Mengen von 6 Mol-% bis 8 Mol-% vorliegen.

8. Verwendung einer Mischung nach den Ansprüchen 6 und 7, die gleiche Mengen von boronsäureestermodifizierten Polyalkyl(meth)acrylat-Copolymeren 1 und diolfunktionalisierten Polyalkyl(meth)acrylat-Copolymeren 2 umfasst, zur Herstellung von assoziativen Verdickern.

9. Verfahren zur Herstellung von assoziativen Verdickern, umfassend die Schritte:
(i) Herstellen eines boronsäureestermodifizierten Polyalkyl(meth)acrylat-Copolymers 1;
(ii) Herstellen eines diolfunktionalisierten Polyalkyl(meth)acrylat-Copolymers 2; und
(iii) Mischen des boronsäureestermodifizierten Polyalkyl(meth)acrylat-Copolymers 1 aus Schritt (i) mit dem diolfunktionalisierten Polyalkyl(meth)acrylat-Copolymer 2 zum Erhalt eines thermo-assoziativen Verdickers.

## Revendications

1. Copolymères de poly((méth)acrylate d'alkyle) modifiés par un ester boronique 1, comprenant les monomères suivants :
(a1) 0,5 % à 30 % en poids de (méth)acrylates d'alkyle en C1-4, de préférence le méthacrylate de méthyle ou le méthacrylate de butyle, plus préférablement le méthacrylate de butyle ;
(a2) 40 % à 70 % en poids de (méth)acrylates d'alkyle en C12-15, de préférence de (méth)acrylates d'alkyle en C12-14 ;
(a3) 15 % à 25 % en poids de (méth)acrylates d'alkyle en C16-30, de préférence de (méth)acrylates d'alkyle en C16-20 ; et
(a4) 5 % à 17 % en poids d'un ester d'acide vinylboronique de formule générale (I)

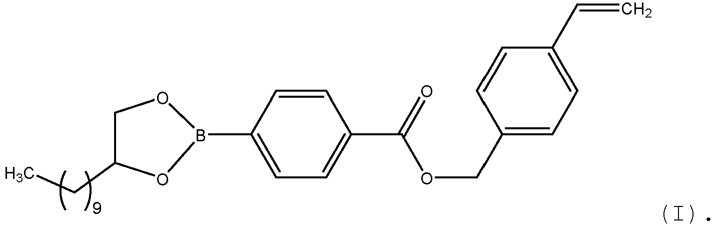

2. Copolymères de poly((méth)acrylate d'alkyle) modifiés par un ester boronique 1 selon la revendication 1, dans lesquels le poids moléculaire moyen en poids M_{w} est dans la plage de 50 000 à 200 000 g/mole, de préférence dans la plage de 70 000 à 170 000 g/mole, déterminé par chromatographie à perméation de gel (CPG) en utilisant des étalons de polyméthacrylate de méthyle selon la norme DIN 55672-1.

3. Utilisation de copolymères de poly((méth)acrylate d'alkyle) modifiés par un ester boronique 1 selon la revendication 1 ou 2 pour la préparation d'épaississants liés par association.

4. Composition d'additif, comprenant :
(A) 40 % à 60 % en poids d'une huile de base ; et
(B) 40 % à 60 % en poids d'un copolymère de poly((méth)acrylate d'alkyle) modifié par un ester boronique 1, comprenant les monomères suivants :
(a1) 0,5 % à 30 % en poids de (méth)acrylates d'alkyle en C1-4, de préférence le méthacrylate de méthyle ou le méthacrylate de butyle, plus préférablement le méthacrylate de butyle ;
(a2) 40 % à 70 % en poids de (méth)acrylates d'alkyle en C12-15, de préférence de (méth)acrylates d'alkyle en C12-14 ;
(a3) 15 % à 25 % en poids de (méth)acrylates d'alkyle en C16-30, de préférence de (méth)acrylates d'alkyle en C16-20 ; et
(a4) 5 % à 17 % en poids d'un ester d'acide vinylboronique de formule générale (I)

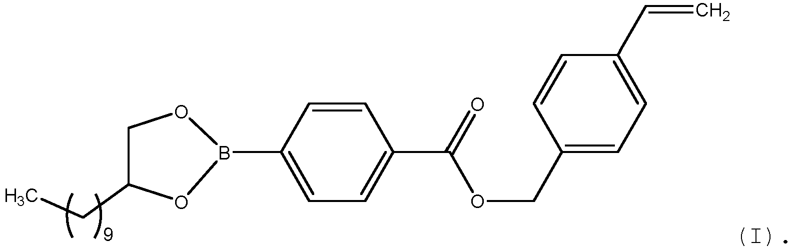

5. Composition d'additif selon la revendication 4, dans laquelle l'huile de base est choisie dans le groupe constitué par les huiles du groupe I de l'API, les huiles du groupe II de l'API, les huiles du groupe III de l'API, les huiles du groupe IV de l'API, les huiles du groupe V de l'API et leurs mélanges ; de préférence les huiles du groupe III de l'API et leurs mélanges.

6. Mélange comprenant des quantités égales de :
(A) un copolymère de poly((méth)acrylate d'alkyle) modifié par un ester boronique 1, comprenant les monomères suivants :
(a1) 0,5 % à 30 % en poids de (méth)acrylates d'alkyle en C1-4, de préférence le méthacrylate de méthyle ou le méthacrylate de butyle, plus préférablement le méthacrylate de butyle ;
(a2) 40 % à 70 % en poids de (méth)acrylates d'alkyle en C12-15, de préférence de (méth)acrylates d'alkyle en C12-14 ;
(a3) 15 % à 25 % en poids de (méth)acrylates d'alkyle en C16-30, de préférence de (méth)acrylates d'alkyle en C16-20 ; et
(a4) 5 % à 17 % en poids d'un ester d'acide vinylboronique de formule générale (I) 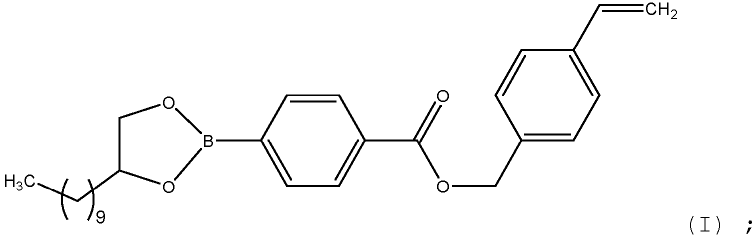 et
(B) un copolymère de poly((méth)acrylate d'alkyle) fonctionnalisé par un diol 2, comprenant les monomères suivants :
(b1) 5 % à 40 % en poids de (méth)acrylates d'alkyle en C1-4 ;
(b2) 40 % à 65 % en poids de (méth)acrylates d'alkyle en C12-15, de préférence de (méth)acrylates d'alkyle en C12-14 ;
(b3) 10 % à 30 % en poids de (méth)acrylates d'alkyle en C16-30, de préférence de (méth)acrylates d'alkyle en C16-20 ; et
(b4) 2 % à 10 % en poids d'un diol choisi dans le groupe constitué par le méthacrylate de 2,3-dihydroxypropyle et le méthacrylate de 5,6-dihydroxyhexyle.

7. Mélange selon la revendication 6, dans lequel le composant (a4) du copolymère de poly((méth)acrylate d'alkyle) modifié par un ester boronique 1 et le composant (b4) du polymère de poly((méth)acrylate d'alkyle) fonctionnalisé par un diol 2 sont présents en quantités égales de 6 % en moles à 8 % en moles.

8. Utilisation d'un mélange selon les revendications 6 et 7, contenant des quantités égales de copolymères de poly((méth)acrylate d'alkyle) modifiés par un ester boronique 1 et de copolymères de poly((méth)acrylate d'alkyle) fonctionnalisés par un diol 2 pour la préparation d'épaississants liés par association.

9. Procédé de préparation d'épaississants liés par association, comprenant les étapes de :
(i) préparation d'un copolymère de poly((méth)acrylate d'alkyle) modifié par un ester boronique 1 ;
(ii) préparation d'un copolymère de poly((méth)acrylate d'alkyle) fonctionnalisé par un diol 2 ; et
(iii) mélange du copolymère de poly((méth)acrylate d'alkyle) modifié par un ester boronique 1 de l'étape (i) avec le copolymère de poly((méth)acrylate d'alkyle) fonctionnalisé par un diol 2 pour recevoir un épaississant thermo-associatif.
